# EUROPEAN PATENT SPECIFICATION

(11) **EP 0 266 587 B1**
(45) Date of publication and mention of the grant of the patent: **08.09.1993**
(21) Application number: 87114923.3
(22) Date of filing: 13.10.1987
(51) Int. Cl.: C08G 61/08

(54) **Thermally activated two component metathesis catalyst system**
Thermisch aktiviertes Zweikomponenten-Metathesekatalysatorsystem
Système catalytique de métathèse à deux composants, thermiquement activable

(30) Priority: 03.11.1986 US 926272
(43) Date of publication of application: 11.05.1988
(73) Proprietor: HERCULES INCORPORATED, Wilmington Delaware 19894 (US)
(72) Inventor: Nelson, Lawrence Lee, Wilmington Delaware 19808 (US)
(74) Representative: Lederer, Franz, Dr.

(56) References cited:
- EP-A- 0 084 888
- EP-A- 0 181 641
- DE-A- 3 211 195
- FR-A- 2 124 619
- US-A- 3 691 095

## Description

This invention relates to the preparation of molded objects from metatnesis-polymerizable cycloolefins using a metathesis-polymerization catalyst, an alkyl aluminum catalyst activator and a reaction rate moderator.

The preparation of thermoset polymers from dicyclopentadiene and other similar cycloolefins, using a two-stream-reaction injection molding technique and metathesis catalysts is disclosed in U.S. Patents 4,400,340 and 4,520,181. A first stream, including the catalyst, and a second stream, including a catalyst activator and a reaction rate moderator, are combined in a mixing head and immediately injected into a mold where cross-linked polymerization and molding to a permanently fixed shape take place simultaneously.

In such a metathesis catalyst system, polymerization takes place extremely rapidly even at low temperatures, sometimes so rapidly that the monomer may polymerize to a solid, immobile condition before the mixed streams can be transferred to the mold. Even with the inclusion of a reaction rate moderator in the activator stream (to delay the catalyst activation until the reaction mass is wholly within the mold), the total time from mixing until polymerization is substantially complete is still just a matter of seconds.

In the typical sysem disclosed, the catalyst component is a tungsten or molybdenum halide and the activator is an alkyl aluminum compound. The reaction rate moderator can be an ester, ether, ketone or nitrile.

That extremely rapid rate of reaction of cycloolefins, even in the presence of the rate-moderated catalyst, has required polymerization by the reaction/injection molding (RIM) process using the two-stream process described in the above patents. Even then, the short gelation times limit the application to relatively small items made in relatively non-detailed molds with a minimum of sharp corners or sections that tend to trap pockets of air if the mold is filled too rapidly or if the viscosity of the polymerization mass builds up too rapidly. Thus thermoset molding techniques such as pour, rotational or resin transfer (RTM) molding techniques that require relatively long mold filling times cannot readily be used.

According to U.S. Patent 4,458,037, the gelation time can be extended by as much ten minutes at room temperature by use of a dialkyl aluminum iodide activator moderated by di-n-butyl ether. When heated to 80°C, this mixture polymerizes in about 15 seconds. This system is unsatisfactory in procedures where filling of the mold takes place slowly, since the mold temperature must be held low enough to keep the reaction mixture fluid until the mold is entirely filled, and then raised to the reaction temperature. That differential between mold filling temperature and polymerization reaction temperature is too great for optimum commercial production rates to be achieved.

U.S. Patents 4,400,340 and 4,568,660 are other patents that have addressed the need for polymerization modifiers, but the materials disclosed, which include ethers, esters, ketones, nitriles and polar cycloolefins, when added to the activator/monomer solution, are able to delay activation at room temperature for periods measured only in seconds.

DE-A-32 11195 describes esters of 5-norbornene-2 carboxylic acid which are obtained by a slow polymerization. The nitrogen containing compounds pyridine and lutidine are used in order to enhance the ratio of the transisomer in the ring opened product. The nitrogen containing heterocyclic compounds are, however, not used as reaction rate moderators.

EP 84 888 discloses a method of making a thermoset homopolymer with the RIM-technique. As reaction moderators ethyl benzoate or butyl ether are preferred.

In EP 181 641 the polymerization reaction is controlled by using an activator in the form of two parts.

What is needed are useful moderators that decrease the reaction rate and activation effect of the aluminum alkyl compound on the tungsten catalyst, so that the onset of polymerization is delayed by minutes or even hours at convenient molding temperatures.

The invention provides a process for making molded objects by reaction/ injection molding from metathesis-polymerizable cycloolefins using a metathesis-polymerization catalyst, an alkyl aluminium or an alkyl tin compound catalyst activator and a reaction rate moderator, which is characterized in that the reaction rate moderator comprises a sterically unhindered or partially unhindered nucleophilic Lewis base selected from the class consisting of unsaturated cyclic amines and saturated polycyclic amines wherein the alkyl aluminium compound is mixed with the cyclic amine or mixture or cyclic amines at a 1:1 to 1:5 molar ratio, and wherein the ratio of the cyclcolefin after the combination of the two parts of the catalyst system to the catalyst compound is from 500:1 to 15000:1 on a molar basis, and the catalyst compound to alkyl aluminium ratio is from 1:2 to 1:5.

The onset of gelation or viscosity build-up of metathesis polymerizable cycloolefins can be significantly delayed at temperatures up to at least about 80°C by the process according to the invention.

For instance, unsaturated cyclic amines and saturated polycyclic amines that may be used as rate moderators are unsaturated cyclic amines such as, e.g., pyridine, 2-, 3-, or 4-substituted, or 3,4-di-substituted pyridines, or 2-substituted, 2,3-di-substituted, or 2,5-di-substituted pyrazines, quinoline and quinoxaline, and cyclic saturated polycyclic amines such as hexamethylene tetramine and 1,4-diazabicyclo[2.2.2]octane. Other suitable unsaturated cyclic amines and saturated polycyclic amines include phenanthridine, pyrimidine, isoquinoline and substituted derivatives of these materials.

The preferred rate moderators are the aromatic cyclic amines in which the hydrogen atoms are on both carbon atoms adjacent the nitrogen atom (strong, sterically unhindered Lewis bases) such as pyridine (particularly in alkylaluminum activator compositions such as trialkylaluminum and mixed trialkylaluminum and dialkylaluminumhalide activators), and including unhindered derivatives of pyridine such as 3-ethyl pyridine, and 4-ethyl pyridine, as well as 1,4-diazabicyclo[2.2.2]octane and hexamethylene tetramine. Similarly, quinoxaline and pyrazine are among the preferred rate moderators, particularly for dialkylaluminumiodide activator compositions, as are also 4-phenyl pyridine, quinoline, quinoxaline, 2,3-dimethyl or 2,5-dimethyl pyrazine, and 1,4-diazabicyclo[2.2.2]octane.

Partially unhindered amines in which, for instance, the hydrogen atom on one of the carbon atoms adjacent the nitrogen atom is replaced by an alkyl group containing 1 to 6 carbon atoms may also be used. The 2-methyl derivatives, in particular, in which the steric bulk around the nitrogen atom is not too large to prevent effective contact with the alkylaluminum atom, may be useful.

The reaction rate moderators according to the invention can be employed in conjunction with conventional metathesis catalysts to polymerize metathesis-polymerizable cyclic olefins, which include most strained ring non-conjugated cycloolefins. Examples include dicyclopentadiene, dicyclopentadiene oligomers, norbornene, norbornadiene, 4-alkylidene norbornenes, dimethanooctahydronaphthalene, dimethanohexahydronaphthalene and substituted derivatives of these compounds. The preferred cyclic olefin monomer is dicyclopentadiene or a mixture of dicyclopentadiene with other strained ring hydrocarbons in ratios of 1 to 99 mole % of either monomer, preferably about 75 to 99 mole % dicyclopentadiene.

A metathesis catalyst system is comprised of two parts, i.e., a catalyst component and an activator. The catalyst component can be either a molybdenum or tungsten halide or such a halide having two valences satisfied by oxygen rather than halogen. The preferred catalyst component is a tungsten halide, and preferably a mixture or complex of tungsten hexachloride (WCl₆) and tungsten oxytetrachloride (WOCl₄) in a molar ratio of WOCl₄ to WCl₆ of about 1:9 to 2:1. This mixture or complex is prepared by contacting essentially pure WCl₆ with a controlled portion of an oxygen donor. Useful oxygen donors include, e.g., oxygen, a hydrated salt, water, a wet molecular sieve and alkyl alcohols. The most preferred oxygen donor is t-butanol. Complete details of the catalyst preparation have been published in the patent literature, for instance, in U.S. Patent 4,568,660.

The tungsten or molybdenum compound is not normally soluble in the cycloolefin, but can be solubilized by complexing it with a phenolic compound. The compound is first suspended in a small amount of an inert diluent such as benzene, toluene, xylene or chlorinated benzene to form a 0.1 to 1 mole per liter slurry. The phenolic compound is added to the slurry in a molar ratio of about 1:1 to 1:3 catalyst compound to phenolic compound and a stream of dry inert gas is passed through the agitated solution to remove hydrogen chloride gas. Preferred phenolic compounds include phenol, alkyl phenols, halogenated phenols or phenolic salts such as lithium or sodium phenoxide. The most preferred compounds are t-butyl phenol, t-octyl phenol and nonyl phenol.

To avoid curtailing shelf-life by premature polymerization of the catalyst component/monomer solution, which would normally occur within a matter of hours, about 1 to 5 moles of a Lewis base or a chelating agent are added per mole of catalyst compound. Preferred chelants include acetylacetones, dibenzoyl methane and alkyl acetoacetates, where the alkyl group contains from 1 to 10 carbon atoms. Preferred Lewis bases are nitriles and ethers such as benzonitrile and tetrahydrofuran. The improvement in stability and shelf-life of the catalyst component/monomer solution is obtained whether the complexing agent is added before or after the phenolic compound. When this complexed catalyst component is added to a purified cycloolefin (such as dicyclopentadiene) it forms a stable solution that has a shelf-life of several months in the absence of an activator.

The second part of the metathesis catalyst system is the activator, which is an alkyl aluminum or an alkyl tin compound. The alkyl aluminum compounds, either trialkyl aluminum or dialkyl aluminum halide, are preferred. Particularly preferred is a dialkyl aluminum halide with an alkyl moiety containing 1 to 12 carbon atoms and iodide as the halide. The activator, which is readily soluble in the cycloolefin, is prepared by mixing the alkyl aluminum compound or mixture of alkyl alumimum compounds with the cyclic amine or mixture of cyclic amines at a 1:1 to 1:5 molar ratio. While either order of adition, i.e., cyclic amine to alkyl aluminum compound or alkyl aluminum compound to cyclic amine, can be used, it is preferred to add the cyclic amine to the alkyl aluminum with agitation. The reaction is highly exothermic, and it is desirable to control the rate of cyclic amine addition to the alkyl aluminum compound so as to maintain the temperature at less than approximately 50°C to prevent decomposition of the rate moderastor complex. In the case of solid cyclic amines, the base can be added as the solid or dissolved in a suitable nonreactive solvent such as toluene. The activator can also be prepared by dissolving or suspending the cyclic amine in the cycloolefin and adding the alkyl aluminum component.

When the two parts of the catalyst system are combined, the resulting cycloolefin (for example dicyclopentadiene) to catalyst compound ratio will be from about 500:1 to about 15,000:1 on a molar basis, preferably 2,000:1 and the catalyst compound to alkyl aluminum ratio will be from about 1:2 to about 1:5.

A cycloolefin reaction mixture moderated by a sterically unhindered or partially unhindered cyclic amine according to this invention remains fluid for a relatively long time at room temperature prior to forming a gel. As long a time as 1 to 4 hours can be required for gel formation at room temperature. Thus, the catalyst components need not be mixed and immediately injected into a mold. While the RIM technique can be employed, other molding techniques can be usd. Moreover, the RIM technique can be used with a premixed reactive solution (i.e., cycloolefin containing both catalyst and activator) and materials can be charged directly into the heated mold without using a mix head on the molding machine.

The great advantage of using the moderators of this invention results from the extended gel time that they provide at convenient molding temperatures, i.e., about 80°C. At 80°C, the gel time can be extended to as long as three minutes and more; whereas solutions containing conventional rate moderators gel within 15 to 20 seconds at most. This extended gel time, during which the reaction mixture remains highly fluid, allows the reaction mixture to be used in techniques where molds are filled slowly. For example, the mixture can be employed in rotational molding where centrifugal force is employed to distribute the mixture and where the polymerization reaction cannot start until uniform distribution is achieved. The mixtures are also useful in preparing polymer articles filled with glass or other fibrous mat reinforcement where the mixture must remain fluid until it has completely impregnated the mat. Manufacture of large objects, where the volume of the mold necessitates long filling time, can also be facilitated by using the moderators of this invention. Using the moderators described in this invention, molds normally can be charged at the polymerization temperature.

In the known processes in which RIM processing is used, combining of the components is most conveniently accomplished by mixing equal parts of two solutions, one of which contains twice the desired concentration of catalyst component, and the other of which contains twice the desired concentration of activator. This is possible, but not necessary, when the rate moderators contemplated herein are employed. Since the reactive mixture does not gel immediately, it is frequently convenient to add one part of the system to substantially all of the cycloolefin and, just prior to the polymerization and molding, add a concentrate of the other part.

The invention is illustrated by the following examples, in which the catalyst component was prepared by suspending a WCl₆/WOCl₄ complex in toluene, reacting it with pheno to solubilize it and complexing it with acetyl acetone. This product was then diluted to a 0.1 molar concentration by adding sufficient additional toluene. A 1.0 molar toluene solution of an 85:15 molar mixture of tri-n-octyl aluminum (TNOA) and dioctyl aluminum iodide (DOAI) was prepared. One equivalent of bis(methoxy) ethyl ether (diglyme) per mole of combined TNOA and DOAI was added to form a standard, state-of-the-art control activator for dicyclopentadiene polymerization.

### Control Example

To a nitrogen-sparged vessel was charged 5 volumes of dicyclopentadiene. To this was added 0.06 volume of the standard 85:15 TNOA/DOAI mixture, and the mass was mixed well. After the mixing, 0.2 volume of the 0.1 M tungsten catalyst component solution was injected and mixed well. The vessel was immersed in a constant temperature bath maintained at 80°C. The same procedure was simultaneously carried out using a 1.0 M TNOA solution free of DOAI as the activator.

The time from addition of the tungsten catalyst component until formation of a non-fluid gel was noted and recorded as the gel time. Similarly the time from addition of the catalyst until the temperature reached one-half of the final exotherm temperature was noted and recorded as the induction time or cure time. These values for the control examples, are recorded in Table I.

### Examples 1 to 9

The procedure used to test the control or standard activators was followed using similar molar quantities of various cyclic and polycyclic amines in place of diglyme. Moderators tested and the gel and cure times achieved therewith are recorded in Table I.

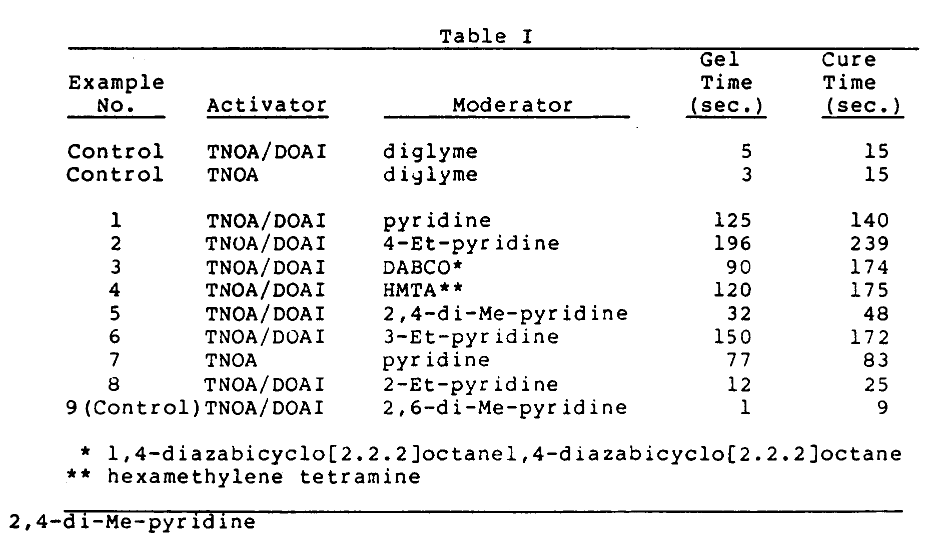

The data from Examples 1 through 7 clearly show the significant increase in gel and cure times of the dicyclopentadiene solutions containing the unhindered unsaturated cyclic amines and the unhindered polycyclic amines. It will be noted, that among these examples, the fastest acting systems using compounds according to this invention are Examples 5 and 8, wherein the amines are partially hindered and thus exert a limited moderating effect. In Control Example 9, the amine is hindered on both sides in the 2- and 6-positions and is thus totally ineffective in delaying the reaction.

### Example 10

In this example, the activator was the 85:15 TNOA/DOAI mixture containing an equimolar amount of a mixture of pyridine (PY) and diglyme (DG). Polymerization of dicyclopentadiene with this activator/modera tor shows the possibility of achieving preselected values of gel and cure times to fit a specified molding application, including by using a dual moderator system as in Example 1 (repeated for comparison with other relevant data recorded in Table II).

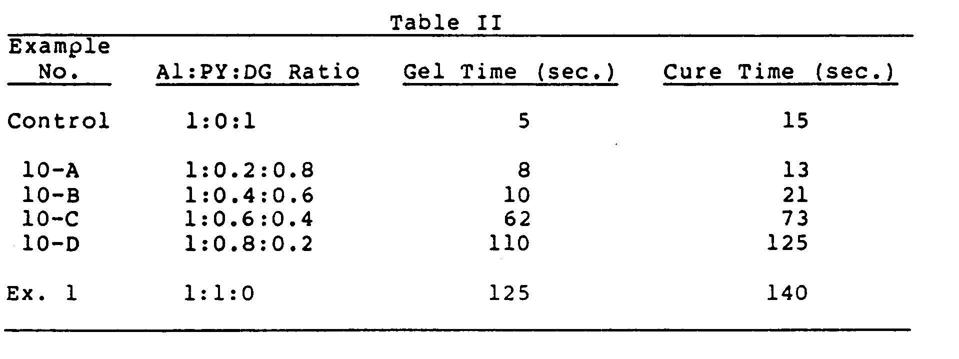

### Examples 11 and 12

Example 1 was repeated, except that, after combining the catalyst and activator with the dicyclopentadiene and mixing, the mixtures were allowed to age at room temperature under nitrogen (Example 11) or in a vacuum (Example 12). At one hour intervals, an aliquot of the mixture was inserted into an 80°C water bath to polymerize it. Results of these experiments, reported in Table III, show the relatively long room temperature shelf-life of the polymerizable feed compositions and also demonstrate that the slow activation rate at 80°C is retained after aging.

**Table III**

| Example No. | Aging Time (hr.) | Cure Time (sec.) |
|---|---|---|
| 11 | 0 | 142 |
| | 1 | 123 |
| | 2 | 116 |
| | 3 | 132 |
| | 4.5* | 192 |
| 12 | 0 | 142 |
| | 1 | 130 |
| | 2* | 163 |

| | | |
|---|---|---|
| * Stiff gel had formed by this time. | | |

### Examples 13 and 14

Catalyst and accivator streams were prepared for a molding trial in an Accuratio™ reaction injection molding machine. The catalyst stream was comprised of 3402 g (7.5 lb.) of dicyclopentadiene containing 6 wt. % solution-polymerized random styrene-butadiene rubber (Stereon® 720A by B. F. Goodrich), 97 ml. of 0.5 M tungsten catalyst, 24 ppm rose oxide and 1 wt. % Irganox 1070 (antioxidant). The activator stream was prepared by mixing 145 ml. of a 1 M alkyl aluminum activator solution with 3402 g (7.5 lbs.) of the rubberized dicyclopentadiene to give a molar ratio of dicyclopentadiene:Al of 500:3. The two component streams were mixed 1 to 1 in a mix head and injected into a 24.4 cm x 25.4 x 0.32 cm (10" x 10" x 1/8") thick plaque mold, which was maintained at approximately 80°C. The final dicyclopentadiene:W:Al ratio was 1,000:1:3.

The alkyl aluminum activator in Example 13 was TNOA moderated with an equivalent amount of a 50:50 molar mixture of pyridine and diglyme and in Example 14, it was an 85:15 molar mixture or TNOA and DOAI with the same moderator mixture.

Relevant data and physical properties are presented in Table IV.

**Table IV**

| Comparison Of Poly(dicyclopentadiene) Physical Properties Of Accuratio RIM Plaques Dicyclopentadiene:W:Al = 1,000:1:3 | | | |
|---|---|---|---|
| | Example 13 | Example 14 | Standard |
| Mold temperature (°C) | 80 | 85 | 80 |
| Gel time (sec.) | 40-51 | 44-58 | - |
| Demold time (sec.) | 55-110 | 90-120 | - |
| Flex modulus KPa (kpsi) | 1544,5 (224) | 1544,5 (224) | 1792,7 (260) |
| Flex strength KPa (kpsi) | 57,9 (8.4) | 71,0 (10.3) | 68,9 (10) |
| Tensile modulus KPa (kpsi) | 1213,5 (176) | 1316,9 (191) | 1103,2 (160) |
| Tensile strength KPa (kpsi) | 31,7 (4.6) | 35,8 (5.2) | 34,5 (5) |
| Plate impact (ft lbs) | 9.8 | 13.3 | 11 |
| Density (gm/cc) | 0.98 | 0.99 | - |

### Example 15

A series of polymerizations was carried out wherein the alkyl aluminum activator was DOAI moderated with cyclic unsaturated tertiary amines. In each case a 1.0 M toluene solution of DOAI was mixed with an equimolar amount of one of the amines. Each of these mixtures was used to polymerize dicyclopentadiene as described in the Control Example. Relevant gel and cure time data are recorded in Table V.

**Table V**

| Example No. | Moderator | Gel Time (sec.) | Cure Time (sec.) |
|---|---|---|---|
| Control | n-butyl ether | 15 | 22 |
| 15 | quinoxaline | 31 | 40 |
| 16 | pyrazine | 171 | 243 |
| 17 | 2,3-dimethyl pyrazine | 43 | 53 |
| 18 | 2,5-dimethyl pyrazine | 63 | 72 |

### Examples 19 to 22

A series or experiments were run wherein dimethanooctahydronaphthalene was polymerized instead of dicyclopentadiene. Activators and moderators were as described in Table VI. Relevant gel and cure times are also recorded in Table VI.

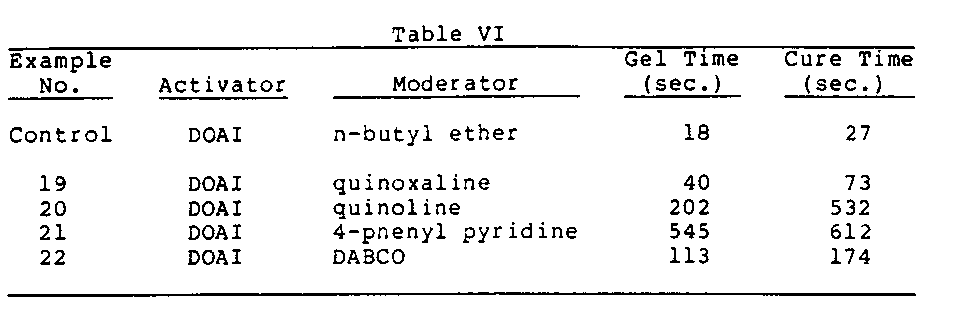

## Claims

1. A process for making molded objects by reaction/ injection molding from metathesis-polymerizable cycloolefins using a metathesis-polymerization catalyst, an alkyl aluminum or an alkyl tin compound catalyst activator and a reaction rate moderator, characterized in that the reaction rate moderator comprises a sterically unhindered or partially unhindered nucleophilic Lewis base selected from the class consisting of unsaturated cyclic amines and saturated polycyclic amines wherein the activator is mixed with said amine at a 1:1 to 1:5 molar ratio, and wherein the ratio of the cycloolefin after the combination of the two parts of the catalyst system to the catalyst compound is from 500:1 to 15000:1 on a molar basis, and the catalyst compound to activator molar ratio is from 1:2 to 1:5.

2. A process for making molded objects as claimed in claim 1, further characterized in that the reaction rate moderator is pyridine, a 2-, 3-, or 4-substituted pyridine, a 2,4- or 3,4-di-substituted pyridine, a 2-substituted, 2,3-di-substituted, or 2,5-di-substituted pyrazine, qulnoline, a quinoxaline, 1,4-diazabicyclo[2.2.2]octane, or hexamethylene tetramine.

3. A process for making molded objects as claimed in claim 2, further characterized in that the reaction rate moderator is pyridine, 3-ethyl pyridine, or 4-ethyl pyridine.

4. A process for making molded objects as claimed in claim 2, further characterized in that the reaction rate moderator is 1,4-diazabicyclo[2.2.2]octane, or hexamethylene tetramine.

5. A process for making molded objects as claimed in claim 3 or 4, further characterized in that the alkylaluminum activator compositions are trialkylaluminum or mixed trialkylaluminum and dialkylaluminum halide activators.

6. A process for making molded objects as claimed in claim 5, further characterized in that the alkylaluminum activator composition is a mixture of tri-n-octyl aluminum and dioctyl aluminum iodide.

7. A process for making molded objects as claimed in claim 2, further characterized in that the reaction rate moderator is 4-phenyl pyridine, quinoline, quinoxaline, 2,3-dimethyl or 2,5-dimethyl pyrazine, or 1,4-diazabicyclo[2.2.2]octane.

8. A process for making molded objects as claimed in claim 7 further characterized in that the alkylaluminum activator composition is dioctyl aluminum iodide.

9. A polymerization feed composition for making molded objects by the reaction/injection molding process from metathesis-polymerizable cycloolefins comprising a alkyl aluminum catalyst activator and a reaction rate moderator, characterized in that it also contains a metathesispolymerization catalyst, and the reaction rate moderator is a sterically unhindered or partially unhindered nucleophilic Lewis base selected from the class consisting of unsaturated cyclic amines and saturated polycyclic amines as claimed in any of claims 1 to 8.

10. Use of the polymerization feed composition as claimed in claim 9 for making molded objects by the reaction/ injection molding process.

## Patentansprüche

1. Verfahren zur Herstellung von durch Reaktionsspritzgießen aus metathesepolymerisierbaren Cycloolefinen unter Verwendung eines Metathesepolymerisationskatalysators, eines Alkylaluminiums oder einer Alkylzinnverbindung als Katalysatoraktivator und eines Reaktionsgeschwindigkeitsmoderators geformten Gegenständen, dadurch gekennzeichnet, daß der Reaktionsgeschwindigkeitsmoderator eine sterisch nicht gehinderte oder teilweise nicht gehinderte nucleophile Lewis-Base umfaßt, die ausgewählt ist aus der Klasse, die aus ungesättigten cyclischen Aminen und gesättigten polycyclischen Aminen besteht, wobei der Aktivator mit besagtem Amin in einem molaren Verhältnis von 1:1 bis 1:5 gemischt wird, und wobei das Verhältnis des Cycloolefins nach dem Vereinigen der zwei Teile des Katalysatorsystems zur Katalysatorverbindung von 500:1 bis 15000:1 auf molarer Basis beträgt und das molare Verhältnis der Katalysatorverbindung zum Aktivator von 1:2 bis 1:5 beträgt.

2. Verfahren zur Herstellung von geformten Gegenständen gemäß Anspruch 1, weiterhin dadurch gekennzeichnet, daß der Reaktionsgeschwindigkeitsmoderator Pyridin, ein 2-, 3- oder 4-substituiertes Pyridin, ein 2,4- oder 3,4-disubstituiertes Pyridin, ein 2-substituiertes, 2,3-disubstituiertes oder 2,5-disubstituiertes Pyrazin, Chinolin, ein Chinoxalin, 1,4-Diazabicyclo[2.2.2]octan oder Hexamethylentetramin ist.

3. Verfahren zur Herstellung von geformten Gegenständen gemäß Anspruch 2, weiterhin dadurch gekennzeichnet, daß der Reaktionsgeschwindigkeitsmoderator Pyridin, 3-Ethylpyridin oder 4-Ethylpyridin ist.

4. Verfahren zur Herstellung von geformten Gegenständen gemäß Anspruch 2, weiterhin dadurch gekennzeichnet, daß der Reaktionsgeschwindigkeitsmoderator 1,4-Diazabicyclo[2.2.2]octan oder Hexamethylentetramin ist.

5. Verfahren zur Herstellung von geformten Gegenständen gemäß Anspruch 3 oder 4, weiterhin dadurch gekennzeichnet, daß die Alkylaluminium-Aktivatorzusammensetzungen Trialkylaluminium oder gemischte Trialkylaluminium- und Dialkylaluminium-Halogenidaktivatoren sind.

6. Verfahren zur Herstellung von geformten Gegenständen gemäß Anspruch 5, weiterhin dadurch gekennzeichnet, daß die Alkylaluminium-Aktivatorzusammensetzung eine Mischung von Tri-n-octylaluminium und Dioctylaluminiumiodid ist.

7. Verfahren zur Herstellung von geformten Gegenständen gemäß Anspruch 2, weiterhin dadurch gekennzeichnet, daß der Reaktionsgeschwindigkeitsmoderator 4-Phenylpyridin, Chinolin, Chinoxalin, 2,3-Dimethyl- oder 2,5-Dimethylpyrazin oder 1,4-Diazabicyclo[2.2.2]octan ist.

8. Verfahren zur Herstellung von geformten Gegenständen gemäß Anspruch 7, weiterhin dadurch gekennzeichnet, daß die Alkylaluminium-Aktivatorzusammensetzung Dioctylaluminiumiodid ist.

9. Polymerisations-Beschickungszusammensetzung zur Herstellung von durch das Reaktionsspritzgießverfahren geformten Gegenständen aus metathesepolymerisierbaren Cycloolefinen umfassend einen Alkylaluminium-Katalysatoraktivator und einen Reaktionsgeschwindigkeitsmoderator, dadurch gekennzeichnet, daß sie auch einen Metathesepolymerisationskatalysator enthält, und der Reaktionsgeschwindigkeitsmoderator eine sterisch nicht gehinderte oder teilweise nicht gehinderte nucleophile Lewis-Base ist, ausgewählt aus der Klasse, die aus ungesättigten cyclischen Aminen und gesättigten polycyclischen Aminen gemäß einem der Ansprüche 1 bis 8 besteht.

10. Verwendung der Polymerisations-Beschickungszusammensetzung gemäß Anspruch 9 zur Herstellung von geformten Gegenständen durch das Reaktionsspritzgießverfahren.

## Revendications

1. Procédé de fabrication d'objets moulés par moulage par réaction/injection à partir de cyclooléfines susceptibles de polymérisation métathé-tique, au moyen d'un catalyseur de polymérisation métathétique, d'un alkylaluminium ou d'un alkylétain servant d'activateur de catalyseur et d'un modérateur de vitesse de réaction, caractérisé en ce que le modérateur de vitesse de réaction comprend une base de Lewis nucléophile encombrée ou partiellement encombrée stériquement, choisie dans la classe constituée par les amines cycliques insaturées et les amines polycycliques saturées, l'activateur étant mélangé à ladite amine dans un rapport molaire de 1:1 à 1:5, le rapport de la cyclooléfine au composé catalyseur, après la combinaison des deux parties du système catalytique, étant compris entre 500:1 et 15 000:1 sur une base molaire, et le rapport molaire du composé catalyseur à l'activateur étant compris entre 1:2 et 1:5.

2. Procédé de fabrication d'objets moulés selon la revendication 1, caractérisé en outre en ce que le modérateur de vitesse de réaction est la pyridine, une pyridine 2-, 3- au 4-substituée, une pyridine 2,4- ou 3,4-disubstituée, une pyrazine 2-substituée, 2,3-disubstituée ou 2,5-disubstituée, la quinoléine, une quinoxaline, le 1,4-diazabicyclo[2.2.2]octane ou l'hexaméthylènetétramine.

3. Procédé de fabrication d'objets moulés selon la revendication 2, caractérisé en outre en ce que le modérateur de vitesse de réaction est la pyridine, la 3-éthylpyridine ou la 4-éthylpyridine.

4. Procédé de fabrication d'objets moulés selon la revendication 2, caractérisé en autre en se que le modérateur de vitesse de réaction est le 1,4-diazabicyclo[2.2.2]octane ou l'hexaméthylènetétramine.

5. Procédé de fabrication d'objets moulés selon la revendication 3 ou 4, caractérisé en outre en ce que les compositions d'activateur à base d'alkylaluminium sont des activateurs à base de trialkylaluminium ou des activateurs mixtes à base de trialkylaluminium et d'halogénure de dialkylaluminium.

6. Procédé de fabrication d'objets moulés selon la revendication 5, caractérisé en outre en ce que la composition d'activateur à base d'alkylaluminium est un mélange de tri-n-octylaluminium et d'iodure de dioctylaluminium.

7. Procédé de fabrication d'objets moulés selon la revendication 2, caractérisé en outre en ce que le modérateur de vitesse de réaction est la 4-phénylpyridine, la quinoléine, la quinoxaline, la 2,3-diméthyl- ou 2,5-diméthylpyrazine ou le 1,4-diazabicyclo[2.2.2]octane.

8. Procédé de fabrication d'objets moulés selon la revendication 7, caractérisé en outre en se que la composition d'activateur à base d'alkylaluminium est l'iodure de dioctylaluminium.

9. Composition d'alimentation de polymérisation pour la fabrication d'objets moulés par le procédé de moulage par réaction/injection à partir de cyclooléfines susceptibles de polymérisation métathé-tique, comprenant un alkylaluminium servant d'activateur de catalyseur et un modérateur de vitesse de réaction, caractérisée en ce qu'elle contient aussi un catalyseur de polymérisation métathétique et en ce que le modérateur de vitesse de réaction est une base de Lewis nucléopbile encombrée ou partiellement encombrée stériquement, choisie dans la classe constituée par les amines cycliques insaturées et les amines polycycliques saturées, selon l'une quelconque des revendications 1 à 8.

10. Utilisation de la composition d'alimentation de polymérisation selon la revendication 9 pour la fabrication d'objets moulés par le procédé de moulage par réaction/injection.
